# EUROPÄISCHE PATENTSCHRIFT

(11) **EP 4 071 680 B1**
(45) Veröffentlichungstag und Bekanntmachung des Hinweises auf die Patenterteilung: **19.02.2025**
(21) Anmeldenummer: 21166922.1
(22) Anmeldetag: 06.04.2021
(51) Int. Cl.: G06Q 10/0631, G06Q 10/0639, G06Q 50/10

(54) **SYSTEM ZUR STRUKTURIERUNG VON LEISTUNGEN IN EINEM ZU REINIGENDEN OBJEKT**
SYSTEM FOR STRUCTURING SERVICES WITHIN AN OBJECT TO BE CLEANED
SYSÈME POUR STRUCTURER DES SERVICES DANS UN OBJET À NETTOYER

(43) Veröffentlichungstag der Anmeldung: 12.10.2022
(73) Patentinhaber: VERMOP GmbH, 82205 Gilching (DE)
(72) Erfinder: Auer, Robert, 86391 Stadtbergen (DE)
(74) Vertreter: Hoffmann Eitle

(56) Entgegenhaltungen:
- EP-A1- 2 916 269
- EP-A1- 3 095 370
- EP-A1- 3 434 166
- WO-A1-2018/019366
- DE-A1- 102014 225 484

## Beschreibung

### Gebiet der Erfindung

Die Erfindung betrifft ein System zur Strukturierung von Reinigungsleistungen in einem zu reinigenden Objekt.

### Hintergrund der Erfindung

Im professionellen Reinigungssektor wird es zunehmend wichtig, den Auftraggebern gegenüber die erbrachten Reinigungsleistungen zu dokumentieren. Jede einzelne Leistung zu dokumentieren und bestätigen, erzeugt bei dem Reinigungspersonal einen deutlichen Mehraufwand. Die Alternative, nämlich die Bestätigung eines gesamten Raumumfanges, hingegen birgt die Gefahr, dass Leistungen bestätigt werden, die nicht erbracht worden sind. Eine weitere zunehmende Schwierigkeit im professionellen Reinigungsbetrieb besteht darin, dass Reinigungsleistungen in Absprache mit den Auftraggebern zunehmend individualisiert werden. Für das Reinigungspersonal sind daher Hilfestellungen erforderlich, damit die vertraglich vereinbarten Leistungen erbracht werden, nicht anstelle dessen alternative, vertraglich nicht erforderte Leistungen erbracht werden, oder aber zusätzliche, nicht gewünschte Leistungen erbracht werden, die einen erhöhten Zeitaufwand erfordern und zu Lasten der Gründlichkeit der vertraglich geforderten Leistungen gehen. Darüber hinaus ist es auch wichtig, ungeschulten Reinigungskräften eine Hilfestellung dahingehend zu geben, wie bestimmte, geforderte Reinigungsleistungen erbracht werden sollen oder optimiert werden können.

WO 2018/019366 A1 betrifft ein Reinigungssystem und Verfahren zur Reinigung von Flächen von Räumen. Das Reinigungssystem zur Reinigung von Flächen, insbesondere Böden von Räumen, umfasst mindestens ein von einem Benutzer handgeführtes Reinigungsgerät und mehrere Reinigungselemente, wobei an dem mindestens einen Reinigungsgerät ein Reinigungselement austauschbar halterbar ist, eine Lokalisierungseinrichtung zum Feststellen, wenn der Benutzer mit dem mindestens einen Reinigungsgerät von einem Raum in einen weiteren Raum wechselt oder gewechselt ist, und eine mit dieser gekoppelte Hinweiseinheit zum Bereitstellen eines Hinweises für den Benutzer, das Reinigungselement am mindestens einen Reinigungsgerät auszutauschen.

### Darstellung der Erfindung

Vor dem Hintergrund des oben gestellten Problemkreises besteht ein zunehmendes Bedürfnis danach, die individuellen, vertraglich vereinbarten Reinigungsleistungen in einem zu reinigenden Objekt zu strukturieren und einer geeigneten Dokumentation zugänglich zu machen.

Diese Aufgabe wird durch ein System zur Strukturierung von Reinigungsleistungen in einem zu reinigenden Objekt mit den Merkmalen des Anspruchs 1 gelöst. Bevorzugte Ausgestaltungen der Erfindung folgen aus den übrigen Ansprüchen.

Das erfindungsgemäße System zur Strukturierung von Reinigungsleistungen in einem zu reinigenden Objekt umfasst Markierungselemente in zu reinigenden Bereichen des zu reinigenden Objekts und/oder an zu reinigenden Gegenständen, sowie von ein von einer Reinigungskraft mitführbares, am Körper der Reinigungskraft tragbares, Ein- und Ausgabegerät, wobei die Markierungselemente einen NFC-Label umfassen und Informationen zu der zu erbringenden Reinigungsleistung enthalten; und das Ein- und Ausgabegerät ein NFC-Lesegerät sowie eine Einrichtung zur drahtlosen Übermittlung von Daten umfasst. Das Ein- und Ausgabegerät umfasst eine Software, über die das NFC-Lesegerät des Ein- und Ausgabegeräts in Kommunikationsverbindung mit einem Markierungselement steht, zur Übertragung der in dem jeweiligen Markierungselement enthaltenen Informationen an das Ein- und Ausgabegerät; und wobei eine elektronische Kommunikationseinheit hierbei angepasst ist, um Daten vom Ein- und Ausgabegerät zu empfangen.

Erfindungsgemäß ist es entscheidend, dass die Kommunikation zwischen den Markierungselementen und dem am Körper der Reinigungskraft tragbaren Ein- und Ausgabegerät über Nachfeldkommunikation (NFC) erfolgt, so dass bei Annäherung an das NFC-Label, vorzugsweise auf wenige Zentimeter und den Verbleib der Kommunikationsverbindung zwischen dem Markierungselement und dem NFC-Lesegerät des Ein- und Ausgabegeräts über einen vorbestimmten Zeitraum hinweg erkannt werden kann, dass die geforderte Reinigungsleistung erbracht worden ist.

Da das Ein- und Ausgabegerät weiterhin eine Einrichtung zur drahtlosen Übermittlung von Daten umfasst, die vorzugsweise ein digitaler Sender ist, kann die so erkannte Leistung an eine elektronische Kommunikationseinheit weitergeleitet werden. Die elektronische Kommunikationseinheit kann entweder direkt dazu dienen, um automatisch eine erbrachte Leistung in einem geeigneten elektronischen Reinigungslogbuch niederzulegen, oder aber um die Daten an einen zentralen, vorzugsweise Cloud-basierten Server des Reinigungsunternehmens weiterzuleiten, wo ein entsprechendes Reinigungslogbuch generiert wird, dem die als erbracht erkannte Reinigungsleistung hinzugefügt wird.

Das Vorsehen von Markierungselementen mit einem NFC-Label besitzt eine Doppelfunktion. Die Markierungselemente dienen nicht nur zur Nahfeldkommunikation mit dem Ein- und Ausgabegerät, sondern dienen zusätzlich dazu, die Reinigungskraft darüber zu informieren, auf welche Weise die Reinigungsleistung erbracht werden soll. So können die Markierungselemente Informationen zu den erforderlichen Reinigungsgeräten, aber auch zu Reinigungsmitteln beinhalten.

Erfindungsgemäß sind das NFC-Lesegerät und die NFC-Label der Markierungselemente dazu angepasst, dass eine Datenübertragung nur erfolgt, wenn das Ein- und Ausgabegerät in einem Abstand zum Markierungselement von weniger als 30cm angeordnet ist.

Vorzugsweise ist das Ein- und Ausgabegerät eine Smartwatch. Eine für Reinigungskräfte geeignete Smartwatch hat den Vorteil, dass diese bequem von der Reinigungskraft am Körper getragen werden kann und gleichzeitig während des Reinigungsvorganges sich bei der händischen Reinigungstätigkeit im Nahfeldkommunikations-bereich des Markierungselements befindet, so dass bequem der Zeitraum ermittelt werden kann, über den die Smartwatch in Kommunikationsverbindung mit dem Markierungselement steht. Die Smartwatch ist dabei so gestaltet, dass sie spritzwassergeschützt ist und bei unbeabsichtigtem Kontakt mit zu Reinigenden Oberflächen keine Kratzer erzeugt. Dazu kann die Smartwatch ein Kunststoffgehäuse besitzen. Um zu erkennen, dass eine gewünschte Reinigungsleistung erbracht wurde, reicht es nicht aus, wenn sich die Reinigungskraft mit der Smartwatch nur kurzzeitig in dem örtlich stark begrenzten Kommunikationsbereich eines Markierungselements befindet. Eine erfolgte Reinigungsleistung wird nur dann erkannt, wenn sich die Smartwatch über einen vorgegebenen Zeitraum im Kommunikationsaustausch befand, so dass angenommen werden kann, dass die gewünschte Reinigungsleistung erbracht wurde.

Die elektronische Kommunikationseinheit, die dazu angepasst ist, um Daten vom Ein- und Ausgabegerät zu empfangen, kann sich im Bereich eines Reinigungswagens befinden, zu dem eine Reinigungskraft im Rahmen des Arbeitsablaufs immer wieder zurückkehrt, um die erforderlichen Reinigungsmedien auszutauschen oder zu reinigen. Auf diese Weise kann bei einer Annäherung der Reinigungskraft mit der Smartwatch an die in einem Reinigungswagen integrierte elektronische Kommunikationseinheit automatisch ein Datentransfer von der Smartwatch zur elektronischen Kommunikationseinheit erfolgen.

Vorzugsweise sind die Markierungselemente mit einer optisch wirkenden Farbkodierung versehen. Dies stellt für Reinigungspersonal mit geringen Sprachkenntnissen die einfachste, sprachneutrale Möglichkeit dar, um zu erfassen, welche Reinigungsleistung zu erbringen ist. Die Farbkodierung beinhaltet dabei bestimmte Reinigungsmittel sowie Reinigungsgeräte, die beispielsweise mit einer übereinstimmenden Kodierung versehen sein können, so dass keine Gefahr besteht, ein für eine bestimmte Oberfläche ungeeignetes Reinigungsmittel zu verwenden.

Nach einer bevorzugten Ausführungsform der Erfindung sind das NFC-Lesegerät und die NFC-Label der Markierungselemente dazu angepasst, dass eine Datenübertragung nur erfolgt, wenn das Ein- und Ausgabegerät in einem Abstand zum Markierungselement von weniger als 20cm angeordnet ist. Dies dient dazu, sicherzustellen, dass die Software des Ein- und Ausgabegeräts tatsächlich nur den relevanten Zeitraum ermittelt über den hinweg das NFC-Lesegerät des Ein- und Ausgabegeräts in Kommunikationsverbindung mit einem Markierungselement steht, das sich in unmittelbarer Nähe befindet. Wäre eine Signalübertragung auch über eine größere Entfernung möglich, könnte nicht darauf geschlossen werden, dass tatsächlich die mit den Markierungselementen in Verbindung stehende Reinigungsleistung erbracht wurde.

Vorzugsweise umfasst das System weiterhin einen Reinigungswagen, der die elektronische Kommunikationseinheit umfasst, wobei die elektronische Kommunikationseinheit dazu angepasst ist, um Daten vom Ein- und Ausgabegerät zu empfangen und über ein in dem zu reinigenden Objekt vorhandenes WLAN oder eine Mobilfunkkarte an einen Server weiterzuleiten. Der Empfang von Daten vom Ein- und Ausgabegerät erfolgt dabei vorzugsweise ebenfalls über eine Nahfeldkommunikation, besonders bevorzugt über Bluetooth.

Da eine Reinigungskraft regelmäßig zwischen dem Reinigungswagen und den zu reinigenden Objekten und/oder Gegenständen hin- und herwechselt, kann bei jeder Annäherung der Reinigungskraft an den Reinigungswagen ein automatischer Datenabgleich erfolgen. Darüber hinaus sendet der Reinigungswagen über ein geeignetes Medium, wie ein in dem zu reinigenden Objekt vorhandenes WLAN oder alternativ auch über eine Mobilfunkkarte die Daten an einen zentralen Server des Reinigungsunternehmens weiter, so dass zumindest sehr zeitnah und bevorzugt in Echtzeit der Reinigungsfortschritt in dem zu reinigenden Objekt erfasst werden kann. Die Weiterleitung der Daten an einen Server besitzt zudem den Vorteil, dass dort das automatisch generierte Reinigungslogbuch hinterlegt sein kann und der Auftraggeber über ein Kundenportal die Möglichkeit besitzt, sich selbst jederzeit davon zu überzeugen, dass die vertraglich vereinbarten Leistungen erfolgen oder ob bei bestimmten nicht täglich wiederkehrenden Leistungen die vereinbarten Zeiträume eingehalten werden.

Nach einer bevorzugten Ausführungsform der Erfindung umfasst das System weiterhin mindestens ein Reinigungsgerät, dass eine NFC-Empfangseinrichtung umfasst, die mit dem Ein- und Ausgabegerät koppelbar ist und die dazu geeignet ist, um Daten vom Ein- und Ausgabegerät zu empfangen. Bevorzugt ist, dass alle wesentlichen Reinigungsgeräte in das erfindungsgemäße System integriert sind. Auf diese Weise kann bei der Reinigungskraft beispielsweise ein Warnhinweis erfolgen, wenn ein falsches Reinigungsgerät eingesetzt wird.

Ebenso sind aber auch spezielle Lösungen denkbar, bei denen sich in einem Gerät zur Ausgabe von Reinigungsflüssigkeit mehrere Kammern und zugehörige Ausgabedüsen befinden und in Abhängigkeit von der Kodierung des NFC-Labels des Kodierungselements und über die Kommunikation mit dem Ein- und Ausgabegerät der Reinigungskraft automatisch die zu der speziellen Reinigungsaufgabe zu verwendende Reinigungsflüssigkeit ausgegeben wird. Mit anderen Worten wird diejenige Ausgabedüse aktiviert, die zu demjenigen Bereich des zu reinigenden Objekts und/oder dem zu reinigenden Gegenstand gehört, der gerade mit dem Ein- und Ausgabegerät in Kommunikationsverbindung steht. Dies verringert die Gefahr, dass die Reinigungskraft versehentlich mit einem ungeeigneten Reinigungsmittel arbeitet.

Vorzugsweise umfasst das mindestens eine Reinigungsgerät weiterhin eine Sendeeinrichtung, so dass auch hier eine Kommunikation entweder zur elektronischen Kommunikationseinheit oder aber zum Ein- und Ausgabegerät erfolgen kann, um den Benutzer beispielsweise zu informieren, wann ein Wischbezug gewechselt werden muss oder wenn das Reinigungsmittel in einem geeigneten Ausgabegerät nahezu erschöpft ist.

Vorzugsweise sind die Eigenschaften des Reinigungsgeräts in Abhängig von den vom Ein- und Ausgabegerät empfangenen Daten veränderbar. Dies kann beispielsweise die automatische Einstellung der Saugleistung an einem Sauggerät sein, die automatische Dosierung der für einen zu reinigenden Gegenstand angemessenen Menge an Reinigungsmittel, um nur einige Beispiele zu nennen.

### Kurze Beschreibung der Figuren

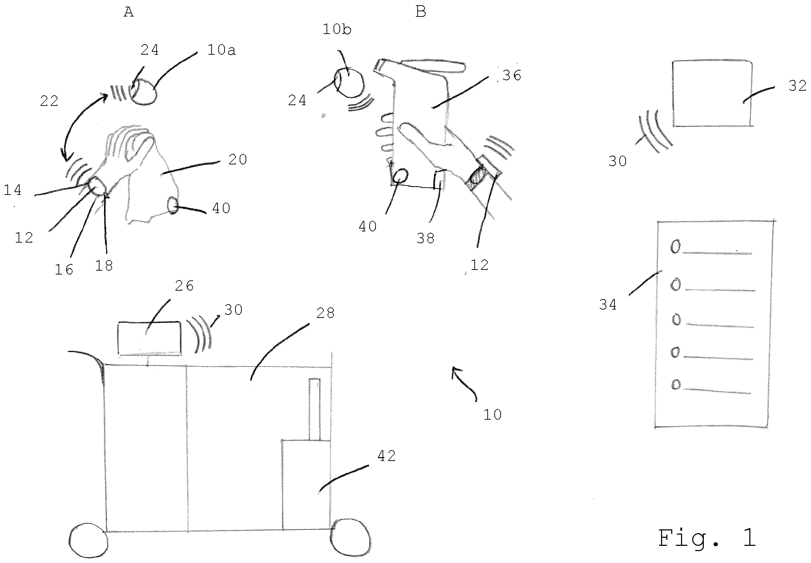

Nachfolgend wird eine Ausführungsform anhand der Fig. 1 schematisch erläutert, die beispielhaft wesentliche Elemente des erfindungsgemäßen Systems zur Strukturierung von Reinigungsleistungen erläutert.

### Wege zur Ausführung der Erfindung

In Fig. 1 ist das erfindungsgemäße System 10 zur Strukturierung von Reinigungsleistungen in einem zu reinigenden Objekt beispielhaft erläutert. Im Bereich A zu reinigender Objekte oder aber auch direkt an einem zu reinigenden Gegenstand B sind dabei Markierungselemente 10a, 10b angebracht, die eine Farbkodierung aufweisen können, um einer Reinigungskraft die Information darüber zu vermitteln, auf welche Weise hier gereinigt werden soll, d.h. mit welchen Reinigungsgeräten und welchem Reinigungsmittel. So kann beispielsweise der Reinigungskraft mittels der optischen Kodierung die Information darüber gegeben werden, ob hier mit einem Baumwolltuch zu reinigen ist, oder ob ein Mikrofasertuch eingesetzt werden soll.

Darüber hinaus sind die Markierungselemente mit einem NFC-Label 24 versehen, das als passives Bauelement gestaltet ist und eine drahtlose Kommunikation zu einer am Handgelenk der Reinigungsperson getragenen Smartwatch 12 herstellen kann. Die Smartwatch 12 stellt dabei ein Ein- und Ausgabegerät dar, das einerseits ein NFC-Lesegerät 14 sowie einen digitalen Sender 16 umfasst. Die Smartwatch 12 kann dabei noch weitere Funktionen beinhalten und der Reinigungskraft beispielsweise eine Hilfestellung geben, wann eine bestimmte Reinigungsleistung begonnen und wann diese abgeschlossen sein sollte, um innerhalb des zur Verfügung stehenden Zeitraums alle zu erfüllenden Reinigungsleistungen abarbeiten zu können.

Darüber hinaus ist die Smartwatch 12 mit einem Display 18 versehen, die einer Reinigungskraft in Form von Piktogrammen Informationen darüber geben kann, welche Reinigungsleistungen wie zu erfüllen sind. Dies ermöglicht es, dass auch Reinigungskräfte mit geringen Sprachkenntnissen erfassen können, welche Tätigkeiten auf welche Weise auszuführen sind.

In Fig. 1 sind zwei zu reinigende Gegenstände A, B mit Markierungselementen 10a, 10b dargestellt. Im vorliegenden Beispiel könnte es sich beispielsweise bei dem Gegenstand A um die Armatur an einem Waschtisch handeln, die mit einem vorgegebenen Tuch 20 abschließend trockenzureiben ist. Die Reinigungskraft kann dies einerseits bereits anhand der geeigneten Farbkodierung erfassen, andererseits kann aber auch ergänzend dazu die Information über die Anzeige 18 der Smartwatch 12 übermittelt werden, so dass eine erhöhte Sicherheit dahingehend besteht, dass die Reinigungsleistung korrekt und mit Einsatz der am besten geeigneten Reinigungsmittel erfolgt.

In der Smartwatch 12 befindet sich ein Speicher für digitale Informationen. Darüber hinaus ist in der Smartwatch Software hinterlegt, die unter anderem auch erfassen kann, über welchem Zeitraum hinweg sich die Smartwatch 12 in Kommunikationsverbindung 22 mit einem NFC-Label 24 am Markierungselement 10a oder 10b befindet. Dabei ist es bevorzugt, dass eine Datenübertragung 22 nur dann erfolgt, wenn sich die Smartwatch 12 in unmittelbarer Nähe zum NFC-Label 24 eines Markierungselements befindet, vorzugsweise in einem Abstand von weniger als 20cm dazu angeordnet ist.

Die Smartwatch 12 weist eine geeignete Software auf, mit der sich ermitteln lässt, über welchen Zeitraum hinweg sich die Smartwatch 12 in Kommunikationsverbindung mit dem NFC-Label 24 befindet. Auf diese Weise kann zwischen einer Situation unterschieden werden, in welcher eine Reinigungskraft mit der Uhr nur kurzzeitig in Kommunikationsverbindung mit einem Markierungselement tritt, und der Situation, dass tatsächlich eine Reinigungsleistung im direkten räumlichen Umfeld des Markierungselementes erfolgt.

Wenn ein vorbestimmter Zeitraum der Kontaktverbindung überschritten wurde, der in der Smartwatch digital aufsummiert wird, wird die dem Markierungselement zugehörige Reinigungsleistung als erbracht angesehen. In diesem Fall sendet die Smartwatch einen digitalen Datensatz aus, der von einer elektronischen Kommunikationseinheit 26 empfangen werden kann, die sich vorzugsweise im Bereich eines Reinigungswagens 28 befindet.

Die elektronische Kommunikationseinheit 26 kann ihrerseits über eine WLAN-Verbindung 30 mit einem zentralen Server 32 in Verbindung stehen, der beispielsweise außerhalb des zu reinigenden Objekts bei der Reinigungsfirma angeordnet ist oder aber Cloud-basiert ist. In dem zentralen Server 32 kann über die von der elektronischen Kommunikationseinheit 26 des Reinigungswagens 28 übersandten Daten erfasst werden, dass vorgegebene Reinigungsleistungen ordnungsgemäß erbracht wurden. Diese Reinigungsleistungen können in ein Reinigungslogbuch 34 eingestellt werden, das eine elektronische Liste darstellt, in der die Erledigung der geschuldeten Reinigungsleistung dokumentiert ist. Auf diese Weise wird automatisch und ohne dass es einer gesonderten Leistung der Reinigungskraft bedarf, automatisch das Reinigungslogbuch generiert. Sofern der Auftraggeber Zugang zu dem zentralen Server 32 oder zu Bereichen der darin niedergelegten Daten erhält, können diese Daten und insbesondere das Reinigungslogbuch vom Auftraggeber eingesehen werden.

Nach erfolgter Reinigungsleistung kann die Reinigungskraft entweder selbsttätig zu dem nächsten Markierungselement gehen, oder aber die Anzeige 18 in der Smartwatch zeigt der Reinigungskraft an, welche Reinigungsleistung nun als nächstes zu erbringen ist. Dies kann im vorliegenden Fall der Waschtisch B sein, welcher der Armatur A zugeordnet ist, die mit dem Markierungselement 10a versehen wurde. Auch am Waschtisch kann somit ein geeignetes Markierungselement 10b angebracht sein, das allerdings mit einer unterschiedlichen Farbkodierung versehen ist, wenn hier unterschiedliche Reinigungsmedien eingesetzt werden sollen. In Fig. 1 ist dazu schematische eine Sprüheinrichtung 36 für ein bestimmtes Reinigungsmittel dargestellt, mit dem im Rahmen des Reinigungsvorgangs im Bereich des Markierungselement 10b Reinigungsmittel aufgesprüht wird. Auch hier findet wieder eine entsprechende Annäherung der Smartwatch an das Markierungselement 10b statt, so dass, in der gleichen Weise wie oben beschrieben wurde, das Erbringen einer Reinigungsleistung verifiziert werden kann.

Auch der Sprühapplikator 36 kann dabei mit einer NFC-Empfangseinrichtung versehen sein, die beispielsweise über einen in dem Sprühapplikator 36 angeordneten Stellmotor die Ausgabedüse verschließt und nur dann öffnet, wenn sich aus der Kommunikation mit dem NFC-Label 24 am Markierungselement 10b ergibt, dass es sich hierbei um das richtige Reinigungsmittel handelt. Alternativ dazu oder ergänzend dazu kann auch der Sprühapplikator mit einer Farbkodierung 40 versehen sein, die es der Reinigungskraft durch einfachen Farbabgleich einfach macht, das für eine bestimmte Reinigungsaufgabe vorgesehene Reinigungsmittel korrekt zuordnen zu können.

Das gleiche gilt im Übrigen auch für das Reinigungstuch 20, das ebenfalls eine mit der Farbkodierung des Markierungselements 10a übereinstimmende Markierung 40 besitzen kann.

In gleicher Weise können weitere Reinigungsgeräte, die mit dem Reinigungswagen 28 mitgeführt werden, mit entsprechenden NFC-Empfangseinrichtungen aber auch Sendeeinrichtungen versehen sein, um in optimaler Weise auch komplexe Reinigungsleistungen und deren Abläufe strukturieren zu können, beispielsweise die Erbringungen der Leistungen verifizieren zu können oder aber auch die Reinigungsgeräte ohne weiteres Zutun einer Reinigungskraft in Bezug auf bestimmte Reinigungsleistungen konfigurieren zu können, indem beispielsweise angepasst an den Bodenbelag die Saugleistung eines Staubsaugers 42 angepasst wird. Alternativ kann die Reinigungskraft Anweisungen erhalten, indem beispielsweise der Reinigungskraft mitgeteilt wird, welche Saugdüse an einem Staubsauger eingesetzt werden soll.

Wenn alle Reinigungsgeräte digitale Sender besitzen, kann der gesamte Reinigungsprozess einer Leistungsauswertung unterworfen werden. Daten können in Echtzeit gesammelt und verarbeitet werden, und Leistungskennzahlen können über ein automatisch generiertes Reinigungslogbuch erstellt werden.

Das erfindungsgemäße System kann darüber hinaus auch dazu verwendet werden, um eine Prozessoptimierung der Reinigungsleistungen zu erreichen, indem der Reinigungskraft eine sinnvolle Abfolge der zu erbringenden Reinigungsleistungen vorgegeben wird. Dabei werden die in einem digitalen Raumplan zu den individuellen Reinigungsleistungen hinterlegten Daten eingesetzt und über die Smartwatch der Reinigungskraft eine sinnvolle Abfolge der zu erbringenden Reinigungsleistungen vorgeschlagen, so dass es zu möglichst wenigen Zwischenschritten im gesamten Reinigungsprozess kommt, in denen Reinigungsmedien ausgetauscht werden müssen.

Indem Anweisungen an die Reinigungskräfte mittels Piktogrammen erfolgen können, können diese sprachneutralen Anweisungen auch bei Personen mit verringerten Sprachkenntnissen sicher erfasst und umgesetzt werden.

## Patentansprüche

1. System zur Strukturierung von Reinigungsleistungen in einem zu reinigenden Objekt, umfassend:
- Markierungselemente (10a, 10b) in zu reinigenden Bereichen (A) des zu reinigenden Objekts und/oder an zu reinigenden Gegenständen (B); sowie
- ein von einer Reinigungskraft mitführbares, am Körper der Reinigungskraft tragbares Ein- und Ausgabegerät (12); wobei
- die Markierungselemente (10a, 10b) ein NFC-Label (24) umfassen und Informationen zu der zu erbringenden Reinigungsleistung enthalten; und
- das Ein- und Ausgabegerät (12) ein NFC-Lesegerät (14) sowie eine Einrichtung (16) zur drahtlosen Übermittlung von Daten umfasst;
- das Ein- und Ausgabegerät (12) eine Software umfasst, über die das NFC-Lesegerät (14) des Ein- und Ausgabegeräts (12) in Kommunikationsverbindung mit einem Markierungselement (10a, 10b) steht, zur Übertragung der in dem jeweiligen Markierungselement (10a, 10b) enthaltenen Informationen an das Ein- und Ausgabegerät (12); und
- eine elektronische Kommunikationseinheit (26) hierbei angepasst ist, um Daten vom Ein- und Ausgabegerät (12) zu empfangen,
wobei das NFC-Lesegerät (14) und die NFC-Label (24) der Markierungselemente (10a, 10b) dazu angepasst sind, dass eine Datenübertragung nur erfolgt, wenn das Ein- und Ausgabegerät (12) in einem Abstand zum Markierungselement (10a, 10b) von weniger als 30cm angeordnet ist.

2. System nach Anspruch 1, wobei
das Ein- und Ausgabegerät eine Smartwatch (12) ist.

3. System nach Anspruch 1 oder Anspruch 2, wobei die Markierungselemente (10a, 10b) mit einer optisch wirkenden Farbkodierung versehen sind.

4. System nach einem der vorhergehenden Ansprüche, wobei das NFC-Lesegerät (14) und die NFC-Label (24) der Markierungselemente (10a, 10b) dazu angepasst sind, dass eine Datenübertragung nur erfolgt, wenn das Ein- und Ausgabegerät (12) in einem Abstand zum Markierungselement (10a, 10b) von weniger als 20cm angeordnet ist.

5. System nach einem der vorhergehenden Ansprüche, wobei die Informationen zu der zu erbringenden Reinigungsleistung, Informationen zu den erforderlichen Reinigungsgeräten und/oder Reinigungsmitteln, enthalten.

6. System nach einem der vorhergehenden Ansprüche, weiter umfassend einen Reinigungswagen (28), der die elektronische Kommunikationseinheit (26) umfasst, wobei die elektronische Kommunikationseinheit (26) dazu angepasst ist, um Daten vom Ein- und Ausgabegerät (12) zu empfangen und über ein in dem zu reinigenden Objekt vorhandenes WLAN (30) oder eine Mobilfunkkarte an einen Server (32) weiterzuleiten.

7. System nach Anspruch 6, wobei
der Server (32) ein zentraler Server eines Reinigungsunternehmens ist, wobei die elektronische Kommunikationseinheit (26) angepasst ist, um automatisch eine erbrachte Leistung in einem elektronischen Reinigungslogbuch niederzulegen, oder um die Daten an den zentralen Server des Reinigungsunternehmens weiterzuleiten, wo ein entsprechendes Reinigungslogbuch generiert wird, und
das System derart angepasst ist, dass bei jeder Annäherung der Reinigungskraft an den Reinigungswagen (28) ein automatischer Datenabgleich erfolgt und die Weiterleitung der Daten an den Server (32) sehr zeitnah erfolgt.

8. System nach Anspruch 7, wobei
das System derart angepasst ist, dass die Weiterleitung der Daten an den Server (32) in Echtzeit erfolgt.

9. System nach einem der vorhergehenden Ansprüche, weiter umfassend mindestes ein Reinigungsgerät (36), das eine NFC-Empfangseinrichtung (38) umfasst, die mit dem Ein- und Ausgabegerät (12) koppelbar ist und die dazu geeignet ist, um Daten vom Ein- und Ausgabegerät (12) zu empfangen.

10. System nach Anspruch 9, wobei
das mindestens eine Reinigungsgerät (36) weiterhin eine Sendeeinrichtung umfasst.

11. System nach Anspruch 9 oder Anspruch 10, wobei die Eigenschaften des Reinigungsgeräts (36) in Abhängigkeit von dem vom Ein- und Ausgabegerät (12) empfangenen Daten veränderbar sind.

12. System nach einem der vorhergehenden Ansprüche, wobei das Ein- und Ausgabegerät (12) angepasst ist, der Reinigungskraft eine Abfolge der zu erbringenden Reinigungsleistungen vorzuschlagen, basierend auf in einem digitalen Raumplan zu den individuellen Reinigungsleistungen hinterlegten Daten.

13. System nach einem der vorhergehenden Ansprüche, weiter umfassend ein Gerät (36) zur Ausgabe von Reinigungsflüssigkeit, wobei das Gerät (36) zur Ausgabe von Reinigungsflüssigkeit zumindest eine Ausgabedüse aufweist und mit einer NFC-Empfangseinrichtung bereitgestellt ist, die angepasst ist, vorzugsweise über einen in dem Gerät (36) zur Ausgabe von Reinigungsflüssigkeit angeordneten Stellmotor, die zumindest eine Ausgabedüse des Geräts (36) zu verschließen und nur dann zu öffnen, wenn sich aus der Kommunikation mit dem NFC-Label (24) am Markierungselement (10a, 10b) ergibt, dass es sich hierbei um das richtige Reinigungsmittel handelt.

14. System nach Anspruch 13, wobei
das Gerät (36) zur Ausgabe von Reinigungsflüssigkeit mehrere Kammern und zugehörige Ausgabedüsen aufweist und angepasst ist, um in Abhängigkeit von der Kodierung des NFC-Labels des Markierungselements (10a, 10b) und über die Kommunikation mit dem Ein- und Ausgabegerät (12) der Reinigungskraft automatisch die zu einer speziellen Reinigungsaufgabe zu verwendende Reinigungsflüssigkeit auszugeben.

## Claims

1. System for structuring cleaning operations in a property to be cleaned, comprising:
- marking elements (10a, 10b) in areas to be cleaned (A) in the property to be cleaned and/or on objects to be cleaned (B); as well as
- an input and output device (12) carried by a cleaner which can be worn on the cleaner's body; wherein
- the marking elements (10a, 10b) comprise an NFC label (24) and contain information on the cleaning operation to be performed; and
- the input and output device (12) comprises an NFC reader (14) and a device (16) for the wireless transmission of data;
- the input and output device (12) comprises software by means of which the NFC reader (14) of the input and output device (12) is in communication with a marking element (10a, 10b) in order to transmit the information contained in the respective marking element (10a, 10b) to the input and output device (12); and
- an electronic communication unit (26) is adapted to receive data from the input and output device (12),
wherein the NFC reader (14) and the NFC labels (24) of the marking elements (10a, 10b) are adapted so that data transmission only takes place if the input and output device (12) is arranged at a distance of less than 30cm from the marking element (10a, 10b).

2. System according to claim 1, wherein
the input and output device is a smartwatch (12).

3. System according to claim 1 or claim 2, wherein
the marking elements (10a, 10b) are provided with an optically effective colour coding.

4. System according to one of the preceding claims, wherein
the NFC reader (14) and the NFC labels (24) of the marking elements (10a, 10b) are adapted so that data transmission only takes place if the input and output device (12) is arranged at a distance of less than 20cm from the marking element (10a, 10b).

5. System according to one of the preceding claims, wherein
the information on the cleaning operation to be performed includes information on the required cleaning equipment and/or cleaning agents.

6. System according to one of the preceding claims, further comprising a cleaning trolley (28) which contains the electronic communication unit (26), wherein the electronic communication unit (26) is adapted to receive data from the input and output device (12) and to forward it to a server (32) via a WLAN (30) present in the property to be cleaned or a mobile phone card.

7. System according to claim 6, wherein
the server (32) is a central server of a cleaning company, wherein the electronic communication unit (26) is adapted to automatically record an operation performed in an electronic cleaning logbook or to forward the data to the cleaning company's central server, where a corresponding cleaning logbook is generated, and
the system is adapted in such a way that, every time the cleaner approaches the cleaning trolley (28), an automatic data synchronisation takes place and the data is forwarded to the server (32) very promptly.

8. System according to claim 7, wherein
the system is adapted in such a way that the data is forwarded to the server (32) in real time.

9. System according to one of the preceding claims, further comprising at least one cleaning device (36) which has an NFC receiver device (38) which can be coupled with the input and output device (12) and which is suitable for receiving data from the input and output device (12).

10. System according to claim 9, wherein
the at least one cleaning device (36) also includes a transmitter device.

11. System according to claim 9 or claim 10, wherein
the properties of the cleaning device (36) may be changed depending on the data received from the input and output device (12).

12. System according to one of the preceding claims, wherein
the input and output device (12) is adapted to suggest to the cleaner a sequence of the cleaning operations to be performed based on data stored in a digital room plan for the individual cleaning operations.

13. System according to one of the preceding claims, further comprising a device (36) for dispensing cleaning liquid, wherein the device (36) for dispensing cleaning liquid has at least one dispensing nozzle and is provided with an NFC receiver device which is adapted to close the at least one dispensing nozzle of the device (36), preferably by means of an actuator arranged in the device (36) for dispensing cleaning liquid, and only to open this if the communication with the NFC label (24) on the marking element (10a, 10b) indicates that this is the correct cleaning agent.

14. System according to claim 13, wherein
the device (36) for dispensing cleaning fluid has several chambers and associated dispensing nozzles and is adapted to automatically dispense the cleaning fluid to be used for a specific cleaning task depending on the coding of the NFC label of the marking element (10a, 10b) and via the communication with the input and output device (12) of the cleaner.

## Revendications

1. Système pour structurer des prestations de nettoyage dans un objet à nettoyer, comprenant :
- des éléments de marquage (10a, 10b) dans des zones (A) à nettoyer de l'objet à nettoyer et/ou sur des objets (B) à nettoyer ; ainsi que
- un appareil d'entrée et de sortie (12) apte à être transporté par du personnel de nettoyage, porté sur le corps du personnel de nettoyage ; dans lequel
- les éléments de marquage (10a, 10b) comprennent une étiquette NFC (24) et contiennent des informations concernant la prestation de nettoyage à fournir ; et
- l'appareil d'entrée et de sortie (12) comprend un appareil de lecture NFC (14) ainsi qu'un dispositif (16) de transmission sans fil de données ;
- l'appareil d'entrée et de sortie (12) comprend un logiciel, par l'intermédiaire duquel l'appareil de lecture NFC (14) de l'appareil d'entrée et de sortie (12) est en liaison de communication avec un élément de marquage (10a, 10b) pour transmettre les informations contenues dans l'élément de marquage (10a, 10b) respectif à l'appareil d'entrée et de sortie (12) ; et
- une unité de communication (26) électronique est adaptée dans ce cadre pour recevoir des données de l'appareil d'entrée et de sortie (12),
dans lequel l'appareil de lecture NFC (14) et l'étiquette NFC (24) des éléments de marquage (10a, 10b) sont adaptés pour qu'une transmission de données n'ait lieu que lorsque l'appareil d'entrée et de sortie (12) est disposé à une distance par rapport à l'élément de marquage (10a, 10b) inférieure à 30 cm.

2. Système selon la revendication 1, dans lequel
l'appareil d'entrée et de sortie est une montre intelligente (12).

3. Système selon la revendication 1 ou la revendication 2, dans lequel
les éléments de marquage (10a, 10b) sont pourvus d'un codage couleur ayant une action optique.

4. Système selon l'une quelconque des revendications précédentes, dans lequel l'appareil de lecture NFC (14) et l'étiquette NFC (24) des éléments de marquage (10a, 10b) sont adaptés pour qu'une transmission de données n'ait lieu que lorsque l'appareil d'entrée et de sortie (12) est disposé à une distance par rapport à l'élément de marquage (10a, 10b) inférieure à 20 cm.

5. Système selon l'une quelconque des revendications précédentes, dans lequel les informations concernant la prestation de nettoyage à fournir contiennent des informations concernant les appareils de nettoyage et/ou les produits de nettoyage requis.

6. Système selon l'une quelconque des revendications précédentes, comprenant par ailleurs un chariot de nettoyage (28), qui comprend l'unité de communication (26) électronique, dans lequel l'unité de communication (26) électronique est adaptée pour recevoir des données de l'appareil d'entrée et de sortie (12) et pour les transférer à un serveur (32) par l'intermédiaire d'un WLAN (30) présent dans l'objet à nettoyer ou d'une carte de téléphonie mobile.

7. Système selon la revendication 6, dans lequel
le serveur (32) est un serveur central d'une entreprise de nettoyage, dans lequel l'unité de
communication (26) électronique est adaptée pour sauvegarder automatiquement une prestation fournie dans un journal de nettoyage électronique et/ou pour transférer les données au serveur central de l'entreprise de nettoyage, où un journal de nettoyage correspondant est généré, et
le système est adapté de telle manière que, lorsque le personnel de nettoyage se rapproche du chariot de nettoyage (28), une mise en correspondance automatique de données est effectuée et le transfert des données au serveur (32) est effectué sans tarder.

8. Système selon la revendication 7, dans lequel
le système est adapté de telle manière que le transfert des données au serveur (32) est effectué en temps réel.

9. Système selon l'une quelconque des revendications précédentes, comprenant par ailleurs au moins un appareil (36) de nettoyage, qui comprend un dispositif de réception NFC (38), qui peut être couplé à l'appareil d'entrée et de sortie (12) et est adapté pour recevoir des données de l'appareil d'entrée et de sortie (12).

10. Système selon la revendication 9, dans lequel
l'au moins un appareil (36) de nettoyage comprend par ailleurs un dispositif d'envoi.

11. Système selon la revendication 9 ou la revendication 10, dans lequel
les propriétés de l'appareil (36) de nettoyage peuvent être modifiées en fonction des données reçues de l'appareil d'entrée et de sortie (12).

12. Système selon l'une quelconque des revendications précédentes, dans lequel l'appareil d'entrée et de sortie (12) est adapté pour proposer au personnel de nettoyage une séquence des prestations de nettoyage à fournir sur la base de données enregistrées dans une projection 3D numérique concernant les prestations de nettoyage individuelles.

13. Système selon l'une quelconque des revendications précédentes, comprenant par ailleurs un appareil (36) destiné à distribuer du liquide de nettoyage, dans lequel l'appareil (36) de distribution de liquide de nettoyage présente au moins une buse de distribution et est fourni avec un dispositif de réception NFC, qui est adapté pour fermer au moins une buse de distribution de l'appareil (36) de préférence par l'intermédiaire du moteur de réglage disposé dans l'appareil (36) de distribution de liquide de nettoyage et ne l'ouvrir que lorsqu'il résulte de la communication avec l'étiquette NFC (24) sur l'élément de marquage (10a, 10b) qu'il s'agit ici du bon produit de nettoyage.

14. Système selon la revendication 13, dans lequel
l'appareil (36) de distribution de liquide de nettoyage présente plusieurs chambres et des buses de distribution associées et est adapté pour distribuer automatiquement le liquide de nettoyage à utiliser pour une tâche de nettoyage spécifique en fonction du codage de l'étiquette NFC de l'élément de marquage (10a, 10b) et par l'intermédiaire de la communication avec l'appareil d'entrée et de sortie (12) du personnel de nettoyage.
